# EUROPÄISCHE PATENTSCHRIFT

(11) **EP 2 833 043 B1**
(45) Veröffentlichungstag und Bekanntmachung des Hinweises auf die Patenterteilung: **01.05.2019**
(21) Anmeldenummer: 14179693.8
(22) Anmeldetag: 04.08.2014
(51) Int. Cl.: F16K 41/10, F16K 41/12

(54) **Ventileinrichtung**
Valve device
Dispositif de vanne

(30) Priorität: 02.08.2013 DE 102013215266
(43) Veröffentlichungstag der Anmeldung: 04.02.2015
(73) Patentinhaber: GEMÜ Gebr. Müller Apparatebau GmbH & Co. Kommanditgesellschaft, 74653 Ingelfingen (DE)
(72) Erfinder: Haidt, Harald, 74613 Öhringen (DE)
(74) Vertreter: DREISS Patentanwälte PartG mbB

(56) Entgegenhaltungen:
- WO-A1-2008/113516
- WO-A1-2009/019036
- DE-A1-102006 025 653
- DE-B3-102008 031 652
- DE-U- 1 898 241
- JP-A- H1 137 329
- JP-A- 2011 237 039
- US-A- 6 123 320

## Beschreibung

Die Erfindung betrifft eine Ventileinrichtung mit einer Membran zur Trennung eines fluidführenden Bereichs von einem nicht fluidführenden Bereich nach dem Oberbegriff des Anspruchs 1.

Ventileinrichtungen mit einer derartigen Membran sind bekannt. Insbesondere ist bekannt, dass die Membran mittels eines Abstützbereiches abgestützt wird.

Aus der DE 10 2007 023 469 B3 ist beispielsweise ein Membranventil bekannt, bei dem ein mechanisches Stützmittel mindestens zwei Stützelemente aufweist. Die zwei Stützelemente weisen jeweils eine unterschiedliche Unterstützungskontur auf einer einer Membrandichtung zugewandten Seite auf. Die Unterstützungskontur ist in Abhängigkeit von der Position eines Ventilkörpers mit der Membrandichtung zur Bildung einer Stützfläche in Kontakt bringbar.

Aus der EP 0 572 966 A1 ist eine Membranbaugruppe für pneumatische Regelgeräte bekannt, bei der ein Zwischenstück einen Membranteller 12 auf der einen Seite einer Membran und einen Ventilkörper auf der anderen Seite der Membran verbindet. Aus der DE 10 2008 031 652 A1 ist ein Membranventil mit einer Membrandichtung zum statischen Dichten eines Strömungsraumes bekannt. Aus der DE 2 727 993 A1 ist eine Vorrichtung zum Getrennthalten zweier benachbarter Räume mit einer Membran bekannt.

Aus der EP 1 710 481 A1 ist ein Membranventil bekannt, bei dem eine fächerartige Stützeinrichtung zur Stabilisierung und Abstützung einer eingesetzten Membrane verwendet wird. Aus der EP 0 109 626 A1 ist ein Membranventil mit einer Unterstützungsfläche bekannt. Aus der EP 0 581 287 A1 ist ein Regelventil mit Membranabstützung bekannt.

Aus der DE 7 241 059 A1 ist ein Membranventil mit einem Ventilkegel bekannt, wobei sich eine gummielastische Membran mit ihrem freien Teil während des gesamten Hubes an eine Abstützung anlegt. Weitere Patentveröffentlichungen aus dem betreffenden Gebiet sind die DE 10 2006 025 653 A1, JP 2011 237039 A, US 6 123 320 A, JP H11 37329 A, WO 2008/113516 A1 und WO 2009/019036 A1. Eine Ventileinrichtung gemäß dem Oberbegriff des Anspruchs 1 zeigt ferner die DE 18 98 241 U.

Aufgabe der Erfindung ist es, eine Ventileinrichtung zu schaffen, die zuverlässig arbeitet, eine hohe Lebensdauer aufweist, und preiswert hergestellt werden kann.

Das der Erfindung zugrundeliegende Problem wird durch den Anspruch 1 gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierfür nochmals explizit hingewiesen wird.

Dadurch dass ein erster Abstützbereich und/oder ein zweiter Abstützbereich und/oder eine Membran derart ausgestaltet sind, dass die Membran, insbesondere durch eine Bewegung der Antriebsstange und/oder in den beiden End-Hubstellungen, also der geöffneten Hubstellung und der geschlossenen Hubstellung, derart an dem ersten und/oder an dem zweiten Abstützbereich anliegen kann, dass die Membran, insbesondere unter einem Fluiddruck in einem fluidführenden Bereich, im Wesentlichen quer zur Längsachse der Antriebsstange belastet wird, wird vorteilhaft erreicht, dass zum einen eine dünnere Membran verwendet werden kann und größere Hübe der Antriebsstange ermöglicht werden. Zum anderen kann gleichzeitig der Druck in den fluidführenden Bereich erhöht werden. Damit wird eine Ventileinrichtung geschaffen, in die vorteilhaft neben einem vergrößerten Hub gleichzeitig eine erhöhte Druckfestigkeit aufweist.

Zu der Erfindung gehört ferner, dass in einer geöffneten Hubstellung ein radial innerer und vom zweiten Abstützbereich beabstandeter Abschnitt der Membran stärker gekrümmt ist als ein radial äußerer und am ersten Abstützbereich anliegender Abschnitt der Membran, und in einer geschlossenen Hubstellung der radial äußere und vom ersten Abstützbereich beabstandete Abschnitt der Membran stärker gekrümmt ist als der radial innere und am zweiten Abstützbereich anliegende Abschnitt der Membran. Hierdurch werden die Spannungen nochmals günstig beeinflusst. Außerdem lässt sich durch die unterschiedlich starken Krümmungen der Membran in den jeweiligen End-Hubstellungen ein großer Ventilhub realisieren.

Ein kleiner Radius (wie bei einem dünnen Rohr), der druckbeaufschlagt wird, weist bei gleicher Wandstärke geringere Spannungen auf als ein größerer Radius (dickeres Rohr) und ist dadurch druckstabiler. Funktion und Auslegung der Abstützbereiche bieten beim Abrollen der Membran eine definierte Kontur in den anliegenden Bereichen, die so gewählt ist, dass die maximal zulässigen Randfaserspannungen des Membranmaterials berücksichtigt und nicht überschritten werden. In den nicht abgestützten Bereichen erzwingen die Konturen einen möglichst geringen Radius in der Membrane (der geringer ist als in den abgestützten Bereichen), so dass auch dort die zulässigen Spannungswerte nicht überschritten werden. Es ergibt sich somit eine entsprechend hohe Stabilität unter Druck. Durch die Erfindung wird die Membrane auch drucklos in die Abrollkontur gezwungen und somit ein Knicken der Membran verhindert.

Erfindungsgemäß sind der erste und der zweite Abstützbereich konkav gekrümmt. Hierdurch wird in der geschlossen bzw. geöffneten Hubstellung der Membran eine besonders spannungsgünstige Form aufgeprägt.

In einer Weiterbildung wird vorgeschlagen, dass der erste Abstützbereich in einem ersten Winkel und der zweite Abstützbereich in einem zweiten Winkel zu der Längsachse angeordnet sind, wobei der erste und der zweite Winkel im Wesentlichen gleich sind. Hierdurch wird eine gleichmäßige und somit materialschonende Verformung der Membran bei einer Betätigung erreicht.

Interessant ist auch jene Weiterbildung, bei der die Membran in einem nicht kraftbeaufschlagten Zustand die Form eines halben Torus mit einer in radialer Richtung in etwa konstanten Krümmung hat. Dabei wird die im kraftfreien Zustand einem halbierten Torus entsprechende Form der Membran in beiden End-Hubstellungen dort, wo die Membran an einem der Abstützbereiche anliegt, vorzugsweise in eine abschnittsweise kegelstumpfähnliche Geometrie überführt.

Vorgeschlagen wir auch, dass die Membran und ein in der geschlossenen Hubstellung an einem Ventilsitz anliegender Verschlussabschnitt einstückig sind. Hierdurch werden Herstell- und Montagekosten reduziert und die Zuverlässigkeit der Abdichtung auch bei hohen Drücken verbessert.

Die Membran kann den Werkstoff Polytetraflourethylen (PTFE) oder ein modifiziertes PTFE umfassen. Dies ist ein im Vergleich zu Elastomermembranen relativ unelastischer Werkstoff, bei dem die erfindungsgemäßen Vorteile besonders prägnant sind.

Unterstützt werden kann das erfindungsgemäße Funktionsprinzip noch dadurch, dass eine in radialer Richtung sich verändernde Wandstärke der Membran verwendet wird, wobei die größte Wandstärke radial innen ist.

Ferner kann bei der Ventileinrichtung mindestens ein Abstützbereich einstückig mit der Antriebsstange sein. Hierdurch wird die Montage vereinfacht und werden herstellkosten reduziert. Ferner wird die Betriebszuverlässigkeit erhöht.

In einer vorteilhaften Ausführungsform sind der erste Abstützbereich und der zweite Abstützbereich im Wesentlichen konzentrisch zueinander angeordnet. Durch diese konzentrische Anordnung wird die Membran vorteilhaft über einen im Wesentlichen zwischen den Abstützbereichen verlaufenden Bereich gespannt, der quer zu einer Längsachse der Antriebsstange ausgerichtet ist. Entsprechend ergibt sich vorteilhaft, dass ein Abknicken der Membran oder eine ungleichmäßige Belastung der Membran verhindert wird.

In einer vorteilhaften Ausführungsform befinden sich der erste und/oder der zweite Abstützbereich in dem nicht fluidführenden Bereich der Ventileinrichtung, wodurch vorteilhaft Materialübergänge und Kanten in dem fluidführenden Bereich reduziert werden. Entsprechend können Kontaminationen in den fluidführenden Bereich verhindert werden.

In einer weiteren vorteilhaften Ausführungsform öffnet sich der erste Abstützbereich hin zu dem fluidführenden Bereich und ist fest mit dem Ventilkörper verbunden. Der zweite Abstützbereich verjüngt sich hin zu dem fluidführenden Bereich und ist fest mit der Antriebsstange verbunden. Durch diese Ausgestaltung lässt sich vorteilhaft die Rückstellkraft auf die Antriebsstange entgegen einer Richtung des Antriebs über den zweiten Abstützbereich definieren. Des Weiteren gibt die Ventileinrichtung damit einen Bereich frei, in dem sich die Membran bewegen und an den jeweiligen Abstützbereichen anliegen kann. Darüber hinaus wird vorteilhaft eine Abstützung in jedem Betriebszustand bei gleichzeitiger Vergrößerung des Hubes ermöglicht.

In einer weiteren vorteilhaften Ausführungsform sind der erste und/oder der zweite Abstützbereich in einer Draufsicht in Richtung eines Antriebs jeweils kreisringförmig ausgebildet, wobei die entsprechenden Kreisringe im Wesentlichen eine gleiche Ringbreite aufweisen. Ausgehend von einer Mittenstellung wird damit ermöglicht, dass in beide Hubrichtungen ausgehend von der Mittenstellung ein etwa gleich weiter Weg zurückgelegt werden kann.

In einer weiteren vorteilhaften Ausführungsform sind ein Außendurchmesser des zweiten Abstützbereichs und ein Innendurchmesser des ersten Abstützbereichs derart aufeinander abgestimmt, dass der zweite Abstützbereich im Wesentlichen im Wesentlichen spielfrei in eine innere Ausnehmung des ersten Abstützbereichs eintauchen kann. Vorteilhaft wird dadurch ein Verklemmen der Membran verhindert und gleichzeitig eine möglichst große Abstützfläche in jeder Hubstellung gewährleistet.

In einer weiteren vorteilhaften Ausführungsform weist der erste Abstützbereich eine erste Abstützfläche und der zweite Abstützbereich eine zweite Abstützfläche auf. Die erste und/oder die zweite Abstützfläche sind im Querschnitt konkav ausgebildet. Durch die konkave Ausbildung wird eine Aufnahme der Membran mit möglichst gleichmäßiger Kraftverteilung in der Membran ermöglicht. Gleichzeitig kann ein Ablösen und ein Wiederanliegen der Membran vorteilhaft unterstützt werden. Des Weiteren kann dadurch eine Anpassung der Abstützflächen an die Form der Membran geschehen.

Eine weitere vorteilhafte Ausführungsform sieht vor, dass die Membran in einem nicht kraftbeaufschlagten Zustand im Querschnitt stärker gekrümmt ist als die erste und/oder die zweite Abstützfläche. Wenn die Membran eine entsprechende Eigenkrümmung aufweist, führt diese vorteilhafte Ausführungsform dazu, dass ein Anliegen und Ablösen der Membran von der jeweiligen Abstützfläche unterstützt wird.

In einer weiteren vorteilhaften Ausführungsform schließen die erste Abstützfläche und die zweite Abstützfläche im Querschnitt jeweils einen ersten und zweiten Winkel ein, wobei der erste und der zweite Winkel im Wesentlichen gleich sind. Dadurch wird ein Raum freigegeben, der bei einer Hubbewegung ein Abknicken der Membran verhindert. Des Weiteren werden sowohl radial nach innen und radial nach außen für die Membran in etwa gleichartige Anlageflächen geschaffen.

In einer weiteren vorteilhaften Ausführungsform weist zumindest einer von sich einander zugewandten Rändern der Abstützbereiche eine Abrundung auf, wodurch insbesondere bei einem Anliegen der Membran an dem zweiten Abstützbereich eine Zerstörung der Membran verhindert wird.

Weitere Merkmale, Anwendungsmöglichkeiten und Vorteile der Erfindung ergeben sich aus der nachfolgenden Beschreibung von Ausführungsbeispielen der Erfindung, die in den Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Für funktionsäquivalente Größen und Merkmale werden in allen Figuren auch bei unterschiedlichen Ausführungsformen die gleichen Bezugszeichen verwendet.

Nachfolgend werden beispielhafte Ausführungsformen der Erfindung unter Bezugnahme auf die Zeichnung erläutert. In der Zeichnung zeigen:
- Figur 1: einen schematischen Querschnitt einer ersten Ausführungsform einer Ventileinrichtung;
- Figur 2: eine Explosionsansicht der Ventileinrichtung;
- Figur 3: verschiedene Elemente der Ventileinrichtung in einer Schnittansicht;
- Figur 4: die Ventileinrichtung in einer ersten Hubstellung;
- Figur 5: die Ventileinrichtung in einer zweiten Hubstellung; und
- Figur 6: einen schematischen teilweisen Schnitt durch eine zweite Ausführungsform einer Ventileinrichtung.

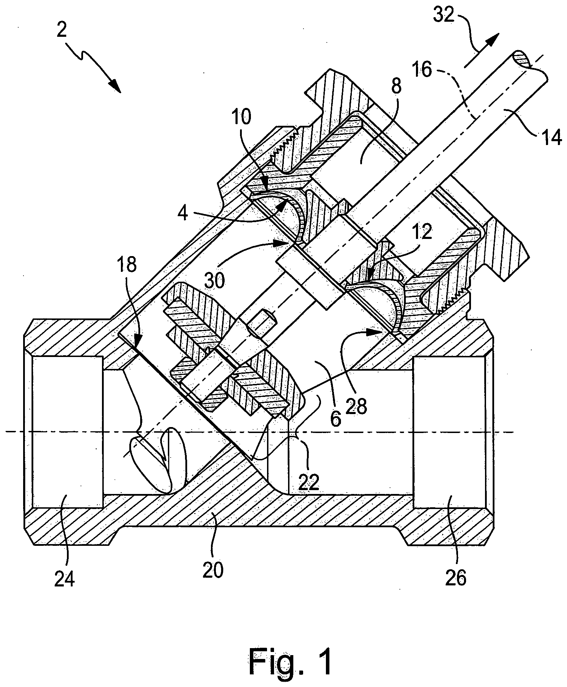

Figur 1 zeigt eine Ventileinrichtung 2 mit einer Membran 4 in einer schematischen Querschnittsansicht. Die Membran 4 ist zur Trennung eines fluidführenden Bereichs 6 von einem nicht fluidführenden Bereich 8 vorgesehen. Des Weiteren sind ein erster Abstützabschnitt 10 und ein zweiter Abstützabschnitt 12 für die Membran 4 gezeigt.

Zum Öffnen und Schließen der Ventileinrichtung 2 wird mittels eines Antriebs eine Antriebsstange 14 im Wesentlichen entlang ihrer Längsachse 16 bewegt. Die Antriebsstange 14 ist durch die Membran 4 hindurch geführt. Die Antriebsstange 14 weist einen mit einem Ventilsitz 18 eines Ventilkörpers 20 zusammenwirkenden, hin zu dem Ventilsitz 18 angeordneten Verschlussabschnitt 22 auf. Der Ventilkörper 20 weist neben dem fluidführenden Bereich 6, in dem sich der Verschlussabschnitt 22 bewegt, Anschlüsse 24 und 26 auf, die in den fluidführenden Bereich 6 münden. Das hier gezeigte Ventilelement 2 ist als Schrägsitzventil ausgeführt, kann selbstverständlich aber auch als Geradsitz oder Eckventil oder aber in einer anderen Form ausgeführt sein.

Die Membran 4 ist in einem ersten Befestigungsabschnitt 28 mit dem Ventilkörper 20 der Ventileinrichtung 2 verbunden.

Alternativ kann die Membran in dem ersten Befestigungsabschnitt auch mit einem Antriebskörper verbunden sein. Der Befestigungsabschnitt 28 ist im Wesentlichen rotationssymmetrisch zur Längsachse 16 ausgebildet.

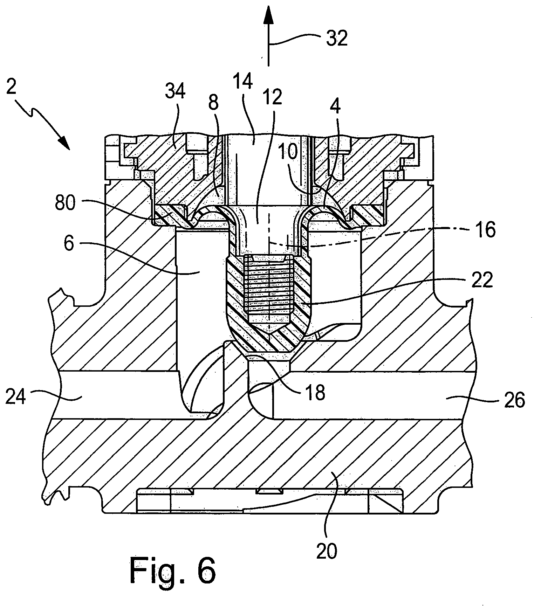

Des Weiteren ist die Membran 4 in einem zweiten radial innerhalb des ersten Befestigungsabschnitts 28 liegenden Befestigungsabschnitt 30 mit der Antriebsstange 14 verbunden. Der Befestigungsabschnitt 30 ist wie auch der erste Befestigungsabschnitt 28 rotationssymmetrisch zur Längsachse 16 ausgebildet. Des Weiteren weist der Ventilkörper 20 den ersten Abstützbereich 10 auf. Die Antriebsstange 14 weist den zweiten Abstützbereich 12 auf. Vorliegend sind die beiden Abstützbereiche 10 und 12 vom Ventilkörper 20 und von der Antriebsstange 14 separate Teile. Wie weiter unten im Zusammenhang mit Figur 6 gezeigt werden wird, kann zumindest der Abstützbereich 12 aber auch direkt an der Antriebsstange 14 ausgebildet, also mit dieser einstückig sein.

Selbstverständlich sind auch andere Ausführungsformen der Membran 4 denkbar. So kann die Membran 4 beispielsweise mit einer Pinn gehalten werden, wobei lediglich die Membran 4 von einer der Pinn gegenüberliegenden Seite fluidbeaufschlagt ist und die Pinn von einem Antrieb bewegt wird. In einer anderen Ausführungsform bilden die Membran 4 und die Antriebsstange eine Einheit.

Der Antrieb für das Ventilelement zur Bewegung der Antriebsstange 14 entlang der Längsachse 16 ist in nicht gezeigter Form in Richtung eines Pfeiles 32 angeordnet. Die Abstützbereiche 10 und 12 befinden sich im nicht fluidführenden Bereich 8 der Ventileinrichtung 2.

In Figur 1 ist die Membran 4 in einem nicht kraftbeaufschlagten Zustand gezeigt, in dem die Membran 4 eine konstante Krümmung aufweist.

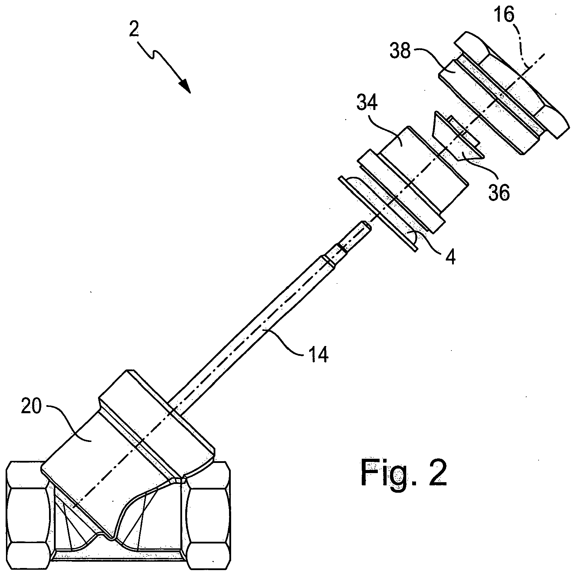

Die Figur 2 zeigt Teile der Ventileinrichtung 2 in einer Explosionsansicht. Bei einer Montage wird zunächst die Membran 4 mit ihrer Durchführung über die Antriebsstange 14 geführt und in den Ventilkörper 20 eingebracht. Ein hülsenartiges Zwischenteil 34 weist den ersten Abstützbereich 10 auf und wird bei der Montage nach der Membran 4 in den Ventilkörper 20 eingebracht. Ein weiteres Zwischenteil 36 weist den zweiten Abstützbereich 12 auf und wird zur Antriebsstange 14 beispielsweise im Presssitz festgelegt.

Bei einer nicht gezeigten Ausführungsform ist das eine Stützelement als Zwischenteil ortsfest angeordnet, wohingegen das andere Stützelement als Stellelement relativ zum Basiselement beweglich angeordnet ist. Damit wird die wechselseitige Bereitstellung des Stützmittels für die jeweilige Stützfunktion entsprechend der Position des Ventilkörpers einfach und wirkungsvoll sichergestellt.

Ein Abschlussteil 38 weist ein zu einem Innengewinde des Ventilkörpers 20 korrespondierendes Außengewinde auf, womit das Abschlussteil 38 in den Ventilkörper 20 eingedreht werden kann. Über die Eindrehung des Abschlussteils 38 wird der erste Befestigungsabschnitt 28 hergestellt, indem ein Außenrand der Membran 4 zwischen dem Zwischenteil 34 und dem Ventilkörper 20 eingeklemmt wird. Anstatt der Verklemmung kann beispielsweise auch eine Verschraubung, Verklebung, etc. erfolgen.

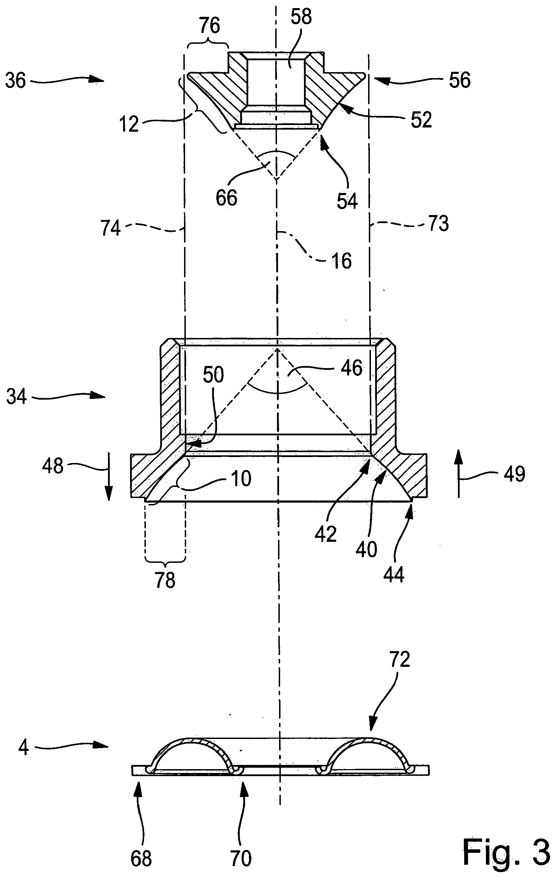

Figur 3 zeigt verschiedene Elemente der Ventileinrichtung 2 in einer Schnittansicht. Die gezeigten Elemente sind beispielhaft zur weiteren Erläuterung entlang der Längsachse 16 gezeigt. Des Weiteren sind die Zwischenteile 34, 36 und die Membran 4 jeweils im Wesentlichen rotationssymmetrisch zur Achse 16 ausgebildet.

Der erste Abstützbereich 10 des Zwischenteils 34 umfasst eine erste Abstützfläche 40 sowie einen Innenrand 42 und einen Außenrand 44. Die erste Abstützfläche 40 ist im gezeigten Querschnitt im Wesentlichen konkav ausgebildet. Die erste Abstützfläche 40 entspricht im Wesentlichen einer Paraboloidstumpfmantelinnenfläche. Des Weiteren kann die erste Abstützfläche 40 auch im Wesentlichen einer Kegelstumpfmantelinnenfläche entsprechen und eine konkave Ausbildung haben. Des Weiteren schließt die erste Abstützfläche 40 im Querschnitt einen ersten Winkel 46 ein. Des Weiteren öffnet sich der erste Abschnittsbereich 10 hin zu dem fluidgeführten Bereich 6, der sich in Richtung eines Pfeiles 48 befindet.

Der Innenrand 42 des Abstützbereichs 10 weist eine Anschrägung auf, die aber auch als Abrundung ausgeführt sein kann. Ausgehend von dem Innenrand 42 des ersten Abstützbereichs 10 weist das Zwischenteil 34 in Richtung des Pfeiles 49 eine Ausnehmung 50 auf.

Das weitere Zwischenteil 36 weist den zweiten Abstützbereich 12 auf. Der zweite Abstützbereich 12 weist eine zweite Abstützfläche 52, einen Innenrand 54 und einen Außenrand 56 auf. Eine Ausnehmung 58 ist für die Durchführung der Antriebsstange 14 vorgesehen. Die zweite Abstützfläche 52 schließt einen zweiten Winkel 66 ein. Des Weiteren verjüngt sich der zweite Abstützbereich 12 hin zu dem fluidführenden Bereich 6, also in Richtung des Pfeils 48. Der zweite Abstützbereich 12 ist in dem Endmontagezustand der Ventileinrichtung 2 fest mit der Antriebstange 14 verbunden. Der Außenrand 56 weist eine Abrundung auf. Anstatt der Abrundung kann der Außenrand 56 auch eine Anschrägung aufweisen. Die zweite Abstützfläche 52 entspricht im Wesentlichen einer Kegelstumpfmantelaußenfläche und ist im Querschnitt im Wesentlichen konkav ausgebildet.

Die Membran 4 weist im Wesentlichen in einem nicht kraftbeaufschlagten Zustand, wie er in Figur 3 dargestellt ist, die Form eines Torusschnittes auf, wobei der Torusschnitt orthogonal zur mittigen Rotationsachse des zugehörigen Torus entsprechend der Längsachse 16 ausgeführt ist. Umgangssprachlich hat die Membran 4 somit das Aussehen eines halben (also in seiner Mittelebene geschnittenen) Donuts oder Autoreifens mit einer in radialer Richtung im Wesentlichen konstanten Krümmung. Eins solche torusförmige Geometrie ist besonders widerstandsfähig gegenüber hohen Drücken und weist eine lange Lebensdauer bzw. eine gute Ermüdungsresistenz auf. Die Membran 4 weist einen ebenen Außenrand 68 auf, der über den ersten Befestigungsabschnitt 28 die Membran 4 fest mit dem Ventilkörper 20 verbindet, vorliegend, indem er zwischen dem Zwischenelement 34 und dem Ventilkörper 28 verklemmt ist.

Des Weiteren weist die Membran 4 einen Innenrand 70 auf, der mittels des zweiten Befestigungsabschnitts 30 fest mit der Antriebsstange 14 verbunden ist, vorliegend, indem er zwischen dem Zwischenteil 36 und einem Kragen (ohne Bezugszeichen) der Antriebsstange 14 verklemmt ist. Die Verbindung des Außenrandes 68 mit dem Ventilkörper 20 und die Verbindung des Innenrand 70 mit der Antriebsstange 14 können beispielhaft jeweils eine Klemmverbindung, eine Klebverbindung oder eine Schraubverbindung sein. Die Wölbung 72 ist in Richtung des Pfeiles 49 ausgerichtet und damit entgegen dem fluidführenden Bereich 6 ausgerichtet. Die Membran 4 umfasst den Werkstoff Polytetraflourethylen (PTFE) oder ein modifiziertes PTFE. Dies ist ein im Vergleich zu Elastomermembranen relativ unelastischer Werkstoff. Durch die Erfindung wird die Membrane auch drucklos in die Abrollkontur gezwungen und somit ein Knicken der Membran verhindert. Die Membran 4 ist im Bereich der Wölbung 72 in Figur 3 in dem nicht kraftbeaufschlagten Zustand im gezeigten Querschnitt im Wesentlichen konstant gewölbt.

Wie beispielhaft anhand der gestichelten Linien 73 und 74 gezeigt ist, sind der erste Abstützbereich 10 und der zweite Abstützbereich 12 in dem Endmontagezustand der Ventileinrichtung 2 konzentrisch zueinander angeordnet, wobei sich der erste Abstützbereich 10 radial außerhalb des Abstützbereiches 12 befindet bzw. sich der zweite Abstützbereich 12 radial innerhalb des ersten Abstützbereiches 10 befindet. In einer Draufsicht entsprechend dem Pfeil 49 in Richtung des Antriebselements sind sowohl der erste als auch der zweite Abstützbereich 10, 12 jeweils kreisringförmig ausgebildet. Die beiden entsprechenden Kreisringe weisen im Wesentlichen eine gleiche Ringbreite auf, wobei die Ringbreite quer zur Längsachse 16 verläuft. Ausgehend von der Mittenstellung kann damit ein in etwa gleich weiter weg in beide Hubrichtungen zurückgelegt werden. Selbstverständlich kann auch abhängig von der Ausführung der Membran 4 ein jeweils unterschiedlich weiter Weg in beide Hubrichtungen zurückgelegt werden.

Ein Außendurchmesser des zweiten Abstützbereichs 12 des Zwischenteils 36 verläuft orthogonal zur Längsachse 16 im Bereich des Außenrandes 56. Ein Innendurchmesser des ersten Abstützbereichs 10 des Zwischenelements 34 verläuft orthogonal zur Längsachse 16 im Bereich der Ausnehmung 50. Der Außendurchmesser des zweiten Abstützbereichs 12 und der Innendurchmesser des ersten Abstützbereichs 10 sind derart aufeinander abgestimmt, dass der zweite Abstützbereich 12 und insbesondere das Zwischenteil 36 im Wesentlichen spielfrei in die innere Ausnehmung 50 eintauchen und aus ihr heraustreten kann.

Der erste Winkel 46 und der zweite Winkel 66 sind entweder im Wesentlichen gleich groß oder unterscheiden sich maximal 20° im Gradmaß, insbesondere um maximal 10° im Gradmaß und insbesondere um maximal 5° im Gradmaß. Bei einer anderen Ausgestaltung der Querschnittsform der Membran 4 kann selbstverständlich auch ein anderes Verhältnis zwischen den Winkeln 46 und 66 gewählt werden.

In einer Ausführungsform kann eine Ringbreite 76 des zweiten Abstützbereichs 12 kleiner ausgeführt sein als eine zweite des ersten Abstützbereichs 10, um den Druck ausgehend von dem Fluid in den Bereich 6 auf den Antrieb in Richtung des Pfeils 49 zu verringern.

Die Membran 4 ist in einem nicht kraftbeaufschlagten Zustand wie in Figur 3 gezeigt im Querschnitt stärker gekrümmt als die erste und/oder die zweite Abstützfläche 40, 52.

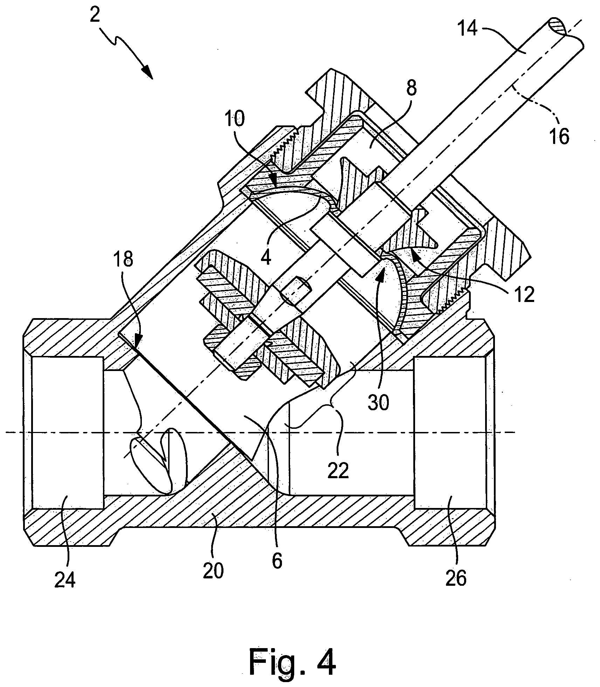

In Figur 4 ist in einer Schnittansicht die Ventileinrichtung 2 aus Figur 1 gezeigt, wobei sich die Antriebstange 14 in einem oberen Hubzustand befindet. Der Verschlussabschnitt 22 ist in diesem oberen Hubzustand am weitesten von dem Ventilsitz 18 entfernt. Die Membran 4 liegt im Wesentlichen an dem gesamten ersten Abstützbereich 10 an. An den zweiten Abstützbereich 12 liegt die Membran im Wesentlichen nicht oder nur in einem kleinen Abschnitt an. Des Weiteren befindet sich die Membran 4 im Bereich des Befestigungsabschnitts 30 abschnittsweise in der Ausnehmung 50.

Die in Figur 4 gezeigte obere Hubstellung der Ventileinrichtung 2 ist auch als geöffnete Endstellung bezeichenbar. In diese geöffnete Endstellung werden der Verschlussabschnitt 22 und mit ihm die Membran 4 durch eine entsprechende Bewegung der Betätigungsstange 14 in Richtung des Pfeils 32 gebracht, und auch wird die Membran 4 in einer gewünschten Weise verformt. Durch die gewählten Parameter ist in dieser geöffneten Endstellung der Ventileinrichtung 4 ein radial innerer, zum Innenrand 70 bzw. dem Befestigungsabschnitt 70 benachbarter und vom zweiten Abstützbereich 12 beabstandeter Abschnitt der Membran 4 stärker gekrümmt (er weist somit einen kleineren Radius auf) als ein radial äußerer, zum Außenrand 68 bzw. dem Befestigungsabschnitt 28 benachbarter und am ersten Abstützbereich 10 anliegender Abschnitt der Membran 4. Beeinflussende Parameter können sein die axiale Relativposition des Innenrands 70 zum Außenrand 68 der Membran 4 in der geöffneten Endstellung, die axiale und radiale Lage des Abstützbereichs 10, die Krümmung des Abstützbereichs 10, und der Winkel des Abstützbereichs 10 insgesamt und/oder im Bereich des Außenrands 68.

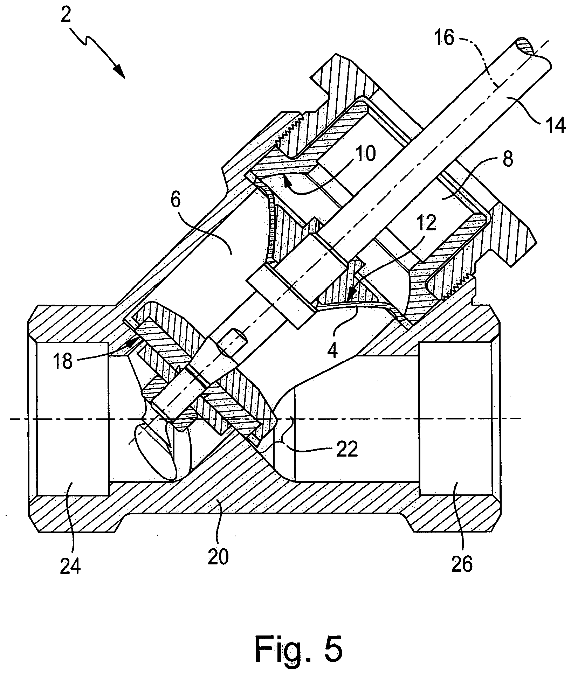

In Figur 5 ist die Ventileinrichtung 2 in einer unteren Hubstellung gezeigt, wobei die Ventileinrichtung 2 verschlossen ist. Der Verschlussabschnitt 22 liegt an dem Ventilsitz 18 an. In dieser unteren Hubstellung liegt die Membran 4 im Wesentlichen an dem gesamten zweiten Abstützbereich 12 an. Die Membran 4 liegt hingegen kaum oder gar nicht an dem ersten Abstützbereich 10 an. In dieser unteren Ventilstellung taucht das Zwischenelement 36 geschützt von der Membran 4 in den fluidführenden Bereich 6 ein.

Die obere Hubstellung und die untere Hubstellung, wie in den Figuren 4 und 5 gezeigt, in die die Membran 4 und der Verschlussabschnitt 22 durch die Betätigungsstange 14 bewegt werden, illustrieren, dass der erste Abstützbereich 10 und/oder zweite Abstützbereich 12 und/oder die Membran 4 derart ausgestaltet sind, dass die Membran 4 in diesen Endstellungen derart an dem ersten und/oder zweiten Abstützbereich 10, 12 anliegt, dass die Membran 4, insbesondere unter einem Fluiddruck in dem fluidführenden Bereich 6, im Wesentlichen quer zur Längsachse 16 der Antriebsstange 14 belastet wird.

Diese Belastung ist dadurch gekennzeichnet, dass insbesondere der auf die Membran 4 wirkende Fluiddruck in dem fluidgeführten Bereich 6 auf die Membran 4 und die dahinter liegenden Abstützbereiche 10 und 12 derart wirkt, dass sich Kräfte in der Membran ausbilden, die im Wesentlichen quer zur Längsachse 16 der Antriebsstange 14 verlaufen. Eine im Wesentlichen quer zur Längsachse 16 verlaufende Kraft liegt mit ihrem Vektor in einer Ebene, die durch die Längsachse 16 führt. Somit wird durch die vorgeschlagene Ventileinrichtung die Rückdruckfestigkeit im Bereich der Membran 4 erhöht und gleichzeitig der Hub der Ventilstange 14 vergrößert.

Die in Figur 5 gezeigte untere Hubstellung der Ventileinrichtung 2 ist auch als geschlossene Endstellung bezeichenbar. In diese geschlossene Endstellung werden der Verschlussabschnitt 22 und mit ihm die Membran 4 durch eine entsprechende Bewegung der Betätigungsstange 14 entgegen der Richtung des Pfeils 32 gebracht, und auch hierbei wird die Membran 4 in einer gewünschten Weise verformt. Durch die gewählten Parameter ist in dieser geschlossenen Endstellung der Ventileinrichtung 4 ein radial äußerer, zum Außenrand 68 bzw. dem Befestigungsabschnitt 28 benachbarter und vom ersten Abstützbereich 10 beabstandeter Abschnitt der Membran 4 stärker gekrümmt (er weist somit einen kleineren Radius auf) als ein radial innerer, zum Innenrand 70 bzw. dem Befestigungsabschnitt 30 benachbarter und am zweiten Abstützbereich 12 anliegender Abschnitt der Membran 4. Auch hier können beeinflussende Parameter die axiale Relativposition des Innenrands 70 zum Außenrand 68 der Membran 4 in der geschlossenen Endstellung, die axiale und radiale Lage des Abstützbereichs 10, die Krümmung des Abstützbereichs 10, und der Winkel des Abstützbereichs 10 insgesamt und/oder im Bereich des Außenrands 68 sein.

Die einem halbierten Torus entsprechende Form der Membran 4 im kraftfreien Zustand wird somit in beiden End-Hubstellungen dort, wo die Membran an einem der Abstützbereiche 10 oder 12 anliegt, in eine abschnittsweise kegelstumpfähnliche Geometrie überführt.

Damit wird die Wölbung 72 der Membran 4 in einem Raum, der in einer der möglichen Hubstellungen durch die Abstützbereiche 10, 12 gebildet wird, aufgenommen und abgestützt. Durch die Bewegung der Antriebsstange 14 in Öffnungsrichtung (Richtung des Pfeils 32) wird also die Geometrie der Membran 4 so verändert, dass in der geöffneten Hubstellung (Figur 4) der Winkel zwischen Längsachse 16 und Membran 4 unmittelbar einwärts vom Außenrand 68 bzw. dem Befestigungsabschnitt 28 ungefähr gleich dem Winkel zwischen Längsachse 16 und Membran 4 in der geschlossenen Hubstellung (Figur 5) unmittelbar auswärts vom Innenrand 70 bzw. dem zweiten Befestigungsabschnitt 30 ist. In gleicher Weise wird durch die Bewegung der Antriebsstange 14 in Schließrichtung (entgegen der Richtung des Pfeils 32) die Geometrie der Membran 4 so verändert, dass in der geschlossenen Hubstellung (Figur 5) der Winkel zwischen Längsachse 16 und Membran 4 unmittelbar auswärts vom Innenrand 70 bzw. dem Befestigungsabschnitt 30 ungefähr gleich dem Winkel zwischen Längsachse 16 und Membran 4 in der geöffneten Hubstellung (Figur 4) unmittelbar einwärts vom Außenrand 68 bzw. dem ersten Befestigungsabschnitt 28 ist. Durch die sich hieraus ergebenden unterschiedlich starken Krümmungen der Membran 4 in den jeweiligen Endstellungen lässt sich ein großer Ventilhub realisieren.

In einer weiteren, in Figur 6 gezeigten Ausführungsform sind die Membran 4 und der zapfenförmig ausgebildete und an seiner Unterseite abgeflachte Verschlussabschnitt 22 einstückig ausgeführt, und zwar vorzugsweise aus einem PTFE oder PTFE-ähnlichen Material. Ferner ist der Abstützabschnitt 12 einstückig an der Antriebsstange 14 ausgebildet, die mittels eines Gewindes in eine sacklochartige Vertiefung im Verschlussabschnitt 22 eingeschraubt ist. Radial auswärts ist an die Membran 4 ein Befestigungsring 80 angeformt, der fluiddicht zwischen dem Ventilkörper 20 und dem Zwischenteil 34 verklemmt ist. Man erkennt ferner in Figur 6 sehr gut, dass in dem dort gezeigten kraftfreien Zwischenzustand - wie bei der zur ersten Ausführungsform gehörenden Figur 1 - die Membran 4 die Form eines halbierten Torus mit in radialer Richtung weitgehend konstanter Krümmung hat.

Es versteht sich, dass bei allen Ausführungsformen der erste Abstützbereich 10 und/oder der zweite Abstützbereich 12 und/oder die Membran 4 derart ausgestaltet sind, dass der auf die Membran 4 wirkende Fluiddruck im Wesentlichen zu Kräften in der Membran 4 führt, die im Wesentlichen quer zur Längsachse 16 der Antriebsstange 14 verlaufen. Ferner erkennt man, dass der erste Abstützbereich 10 und der zweite Abstützbereich 12 im Wesentlichen konzentrisch zueinander angeordnet sind.

## Patentansprüche

1. Ventileinrichtung (2) mit einer Membran (4) zur Trennung eines fluidführenden Bereichs (6) von einem nicht fluidführenden Bereich (8), mit einem ersten und einem zweiten Abstützbereich (10, 12) für die Membran (4), und mit einer Antriebsstange (14), die entlang ihrer Längsachse (16) beweglich ist, wobei der erste Abstützbereich (10) und/oder der zweite Abstützbereich (12) und/oder die Membran (4) derart ausgebildet sind, dass die Membran (4) durch eine Bewegung der Antriebsstange (14) derart an dem ersten und/oder zweiten Abstützbereich (10, 12) anliegen kann, so dass die Membran (4) unter einem Fluiddruck in dem fluidführenden Bereich (6) im Wesentlichen quer zur Längsachse (16) der Antriebsstange (14) belastet wird, wobei in einer geöffneten Hubstellung ein radial innerer und vom zweiten Abstützbereich (12) beabstandeter Abschnitt der Membran (4) stärker gekrümmt ist als ein radial äußerer und am ersten Abstützbereich (10) anliegender Abschnitt der Membran (4), und in einer geschlossenen Hubstellung der radial äußere und vom ersten Abstützbereich (10) beabstandete Abschnitt der Membran (4) stärker gekrümmt ist als der radial innere und am zweiten Abstützbereich (12) anliegende Abschnitt der Membran (4), **dadurch gekennzeichnet, dass** der erste und der zweite Abstützbereich (10, 12) konkav gekrümmt sind.

2. Ventileinrichtung (2) nach Anspruch 1, **dadurch gekennzeichnet, dass** der erste Abstützbereich (10) in einem ersten Winkel (46) und der zweite Abstützbereich in einem zweiten Winkel (66) zu der Längsachse (16) angeordnet sind, wobei der erste und der zweite Winkel (46, 66) im Wesentlichen gleich sind.

3. Ventileinrichtung (2) nach einem der vorstehenden Ansprüche, wobei die Membran (4) in einem nicht kraftbeaufschlagten Zustand die Form eines halben Torus mit einer in radialer Richtung in etwa konstanten Krümmung hat.

4. Ventileinrichtung (2) nach einem der vorstehenden Ansprüche, wobei die Membran (4) und ein in der geschlossenen Hubstellung an einem Ventilsitz (18) anliegender Verschlussabschnitt (22) einstückig sind.

5. Ventileinrichtung (2) nach einem der vorstehenden Ansprüche, wobei die Membran (4) aus einem PTFE-Material hergestellt ist.

6. Ventileinrichtung (2) nach einem der vorstehenden Ansprüche, wobei die im kraftfreien Zustand einem halbierten Torus entsprechende Form der Membran (4) in beiden End-Hubstellungen dort, wo die Membran (4) an einem der Abstützbereiche (10, 12) anliegt, in eine abschnittsweise kegelstumpfähnliche Geometrie überführt wird.

7. Ventileinrichtung (2) nach einem der vorstehenden Ansprüche, wobei mindestens ein Abstützbereich (12) einstückig mit der Antriebsstange (14) ist.

8. Ventileinrichtung (2) nach einem der vorstehenden Ansprüche, wobei sich der erste und/oder der zweite Abstützbereich (10, 12) in dem nicht fluidführenden Bereich (8) der Ventileinrichtung (2) befinden.

9. Ventileinrichtung (2) nach einem der vorstehenden Ansprüche, wobei sich der erste Abstützbereich (10) hin zu dem fluidführenden Bereich (6) öffnet und mit einem Ventilkörper (20) fest verbunden ist, und wobei sich der zweite Abstützbereich (12) hin zu dem fluidführenden Bereich (6) verjüngt und mit der Antriebsstange (14) eines Antriebs fest verbunden ist.

10. Ventileinrichtung (2) nach einem der vorstehenden Ansprüche, wobei der erste und der zweite Abstützbereich (10, 12) in einer Draufsicht in Richtung eines Antriebs jeweils kreisringförmig ausgebildet sind, und wobei die entsprechenden Kreisringe im Wesentlichen eine gleiche Ringbreite (76, 78) aufweisen.

11. Ventileinrichtung (2) nach einem der vorstehenden Ansprüche, wobei ein Außendurchmesser des zweiten Abstützbereichs (12) und ein Innendurchmesser des ersten Abstützbereichs (10) derart aufeinander abgestimmt sind, dass der zweite Abstützbereich (12) im Wesentlichen spielfrei in eine innere Ausnehmung (50) eintauchen kann.

12. Ventileinrichtung (2) nach einem der vorstehenden Ansprüche, wobei die Membran (4) in einem nicht kraftbeaufschlagten Zustand im Querschnitt stärker gekrümmt ist als die erste und/oder die zweite Abstützfläche (40, 52).

13. Ventileinrichtung (2) nach einem der vorstehenden Ansprüche, wobei zumindest einer von sich einander zugewandten Rändern (42, 54) der Abstützbereiche (10, 12) eine Anschrägung der Abrundung aufweist.

## Claims

1. Valve device (2) having a diaphragm (4) to separate a fluid-carrying region (6) from a non-fluid-carrying region (8), having a first and a second supporting region (10, 12) for the diaphragm (4), and having an actuating stem (14) which is movable along its longitudinal axis (16), the first supporting region (10) and/or the second supporting region (12) and/or the diaphragm (4) being of a form such that the diaphragm (4), as a result of a movement of the actuating stem (14), is able to bear against the first and/or second supporting region (10, 12) in such a way that the diaphragm (4), when subject to a fluid pressure in the fluid-carrying region (6), is loaded substantially transversely to the longitudinal axis (16) of the actuating stem (14), with, in an opened position of travel, a radially inner portion of the diaphragm (4), which is spaced away from the second supporting region (12), being more sharply curved than a radially outer portion of the diaphragm (4), which bears against the first supporting region (10), and, in a closed position of travel, the radially outer portion of the diaphragm (4), which is spaced away from the first supporting region (10), being more sharply curved than the radially inner portion of the diaphragm (4), which bears against the second supporting region (12), **characterised in that** the first and the second supporting regions (10, 12) are of a concave curvature.

2. Valve device (2) according to claim 1, **characterised in that** the first supporting region (10) is arranged at a first angle (46) to the longitudinal axis (16) and the second supporting region is arranged at a second angle (66) thereto, the first and the second angles (46, 66) being substantially equal.

3. Valve device (2) according to one of the preceding claims, wherein, in a state where no force is applied to it, the diaphragm (4) is in the form of a semi-torus whose curvature in the radial direction is approximately constant.

4. Valve device (2) according to one of the preceding claims, wherein the diaphragm (4) and a closure portion (22) which bears against a valve seat (18) in the closed position of travel are all in one piece.

5. Valve device (2) according to one of the preceding claims, wherein the diaphragm (4) is made of a PTFE material.

6. Valve device (2) according to one of the preceding claims, wherein, in the two end-positions of travel in which the diaphragm (4) bears against one of the supporting regions (10, 12), the shape of the diaphragm (4), which corresponds to that of a torus sliced in half in the state where no force is applied, is changed to a geometry which is partly similar to that of a truncated cone.

7. Valve device (2) according to one of the preceding claims, wherein at least one supporting region (12) is in one piece with the actuating stem (14).

8. Valve device (2) according to one of the preceding claims, wherein the first and/or second supporting regions (10, 12) are situated in the non-fluid-carrying region (8) of the valve device (2).

9. Valve device (2) according to one of the preceding claims, wherein the first supporting region (10) flares towards the fluid-carrying region (6) and is securely connected to a valve body (20), and wherein the second supporting region (12) tapers towards the fluid-carrying region (6) and is securely connected to the actuating stem (14) of an actuator.

10. Valve device (2) according to one of the preceding claims, wherein the first and second supporting regions (10, 12), when seen in plan looking from the direction of an actuator, are each of an annular form, and wherein the corresponding annuluses are of substantially an equal radial width (76, 78).

11. Valve device (2) according to one of the preceding claims, wherein an outside diameter of the second supporting region (12) and an inside diameter of the first supporting region (10) are adapted to one another in such a way that the second supporting region (12) can penetrate into an inner opening (50) with substantially no clearance.

12. Valve device (2) according to one of the preceding claims, wherein, in a state where no force is applied to it, the diaphragm (4) is more sharply curved in cross-section than the first and/or the second supporting surface (40, 52).

13. Valve device (2) according to one of the preceding claims, wherein at least one of mutually adjacent edges (42, 54) of the supporting regions (10, 12) has a bevel of radius.

## Revendications

1. Dispositif formant soupape (2) muni d'un diaphragme (4) pour séparer une région conductrice de fluide (6) d'une région non conductrice de fluide (8), avec des premier et second secteurs d'appui (10, 12) pour le diaphragme (4), et avec une tige d'entraînement (14) qui est mobile le long de son axe longitudinal (16), dans lequel le premier secteur d'appui (10) et/ou le second secteur d'appui (12) et/ou le diaphragme (4) sont conçus de telle manière que le diaphragme (4), grâce à un déplacement de la tige d'entraînement (14), peut être contigu au premier et/ou au second secteur d'appui (10, 12) de telle manière que le diaphragme (4) sous une pression de fluide dans la région conductrice de fluide (6) est chargé de manière essentiellement transversale à l'axe longitudinal (16) de la tige d'entraînement (14), dans lequel, dans une position de course ouverte, un tronçon radialement intérieur, espacé par rapport au second secteur d'appui (12), du diaphragme (4) est davantage incurvé qu'un tronçon radialement extérieur, contigu au premier secteur d'appui (10), du diaphragme (4), et, dans une position de course fermée, le tronçon radialement extérieur, espacé par rapport au premier secteur d'appui (10), du diaphragme (4) est davantage incurvé que le tronçon radialement intérieur, contigu au second secteur d'appui (12), du diaphragme (4), **caractérisé en ce que** les premier et second secteurs d'appui (10, 12) sont incurvés de manière concave.

2. Dispositif formant soupape (2) selon la revendication 1, **caractérisé en ce que** le premier secteur d'appui (10) est agencé selon un premier angle (46) et le second secteur d'appui est agencé selon un second angle (66) par rapport à l'axe longitudinal (16), dans lequel les premier et second angles (46, 66) sont essentiellement égaux.

3. Dispositif formant soupape (2) selon l'une quelconque des revendications précédentes, dans lequel le diaphragme (4), dans un état où il n'est pas soumis à une force, présente la forme d'un demi-tore avec une courbure approximativement constante dans la direction radiale.

4. Dispositif formant soupape (2) selon l'une quelconque des revendications précédentes, dans lequel le diaphragme (4) et un tronçon d'obturation (22) contigu à un siège de soupape (18) dans la position de course fermée sont d'un seul tenant.

5. Dispositif formant soupape (2) selon l'une quelconque des revendications précédentes, dans lequel le diaphragme (4) est réalisé à partir d'un matériau à base de PTFE.

6. Dispositif formant soupape (2) selon l'une quelconque des revendications précédentes, dans lequel la forme du diaphragme (4), qui dans l'état exempt de force correspond à un tore divisé en deux, est conservée selon une géométrie partiellement en forme de tronc de cône dans les deux positions de fin de course là où le diaphragme (4) est contigu à l'un des secteurs d'appui (10, 12).

7. Dispositif formant soupape (2) selon l'une quelconque des revendications précédentes, dans lequel au moins un secteur d'appui (12) fait partie intégrante de la tige d'entraînement (14).

8. Dispositif formant soupape (2) selon l'une quelconque des revendications précédentes, dans lequel les premier et/ou second secteurs d'appui (10, 12) se trouvent dans la région non conductrice de fluide (8) du dispositif formant soupape (2).

9. Dispositif formant soupape (2) selon l'une quelconque des revendications précédentes, dans lequel le premier secteur d'appui (10) est ouvert vers la région conductrice de fluide (6) et est relié de manière fixe à un corps de soupape (20), et dans lequel le second secteur d'appui (12) se rétrécit vers la région conductrice de fluide (6) et est relié de manière fixe à la tige d'entraînement (14) d'un entraînement.

10. Dispositif formant soupape (2) selon l'une quelconque des revendications précédentes, dans lequel les premier et second secteurs d'appui (10, 12) sont formés respectivement de manière annulaire dans une vue en plan dans la direction d'un entraînement, et dans lequel les anneaux circulaires respectifs présentent essentiellement une largeur d'anneau (76, 78) identique.

11. Dispositif formant soupape (2) selon l'une quelconque des revendications précédentes, dans lequel un diamètre extérieur du second secteur d'appui (12) et un diamètre intérieur du premier secteur d'appui (10) sont ajustés l'un à l'autre de telle manière que le second secteur d'appui (12) peut plonger dans un évidement intérieur (50) essentiellement sans présence de jeu.

12. Dispositif formant soupape (2) selon l'une quelconque des revendications précédentes, dans lequel le diaphragme (4), dans un état où il n'est pas soumis à une force, est davantage incurvé en coupe transversale que les première et/ou seconde surfaces d'appui (40, 52).

13. Dispositif formant soupape (2) selon l'une quelconque des revendications précédentes, dans lequel au moins l'un des bords (42, 54) mutuellement opposés des secteurs d'appui (10, 12) présente un biseautage de l'arrondi.
